# EUROPEAN PATENT APPLICATION

(11) **EP 3 766 624 A1**
(43) Date of publication of application: **20.01.2021**
(21) Application number: 19767881.6
(22) Date of filing: 08.03.2019
(51) Int. Cl.: B23K 26/035, B23K 26/00

(54) **LASER LIGHT CENTERING METHOD AND LASER PROCESSING DEVICE**

(30) Priority: 12.03.2018 JP 2018044102
(71) Applicant: Amada Co., Ltd., Isehara-shi, Kanagawa 259-1196 (JP)
(72) Inventor: YAMANASHI, Takaaki, Isehara-shi Kanagawa 259-1196 (JP); FUNAKI, Koji, Isehara-shi Kanagawa 259-1196 (JP); MIYOSHI, Hironobu, Isehara-shi Kanagawa 259-1196 (JP)
(74) Representative: Grünecker Patent- und Rechtsanwälte PartG mbB
(86) International application number: PCT/JP2019/009402
(87) International publication number: WO 2019/176786

(57) **Abstract**

A shape of a distal end face of a nozzle of a laser processing head of a laser processing machine is image-captured by a camera, (2) a position of the center of a nozzle hole is calculated based on the captured shape of the distal end face, (c) a test beam is irradiated from the nozzle hole, (3) the shape of the distal end face of the nozzle is image-captured in a state where the test beam is being irradiated and a position of the test beam is calculated, (4) a positional error between the center of the nozzle hole and the test beam that have been calculated are calculated, and (5) a beam path adjusting mechanism that adjusts an incident angle of the test beam onto a condenser lens in the laser processing head is controlled based on the positional error to make the center of the nozzle hole and the test beam coincident with each other.

## Description

### TECHNICAL FIELD

The present invention relates to a method for centering a laser light and to a laser processing machine capable of carrying out the centering method.

### BACKGROUND ART

In a case where the center of a nozzle hole of a laser processing head doesn't coincide with a beam axis of a laser beam in a laser processing machine, a processing failure may occur in laser processing. Therefore, the center of the nozzle hole and the beam axis of the laser beam are made coincident with each other (see Patent Documents 1 to 3 listed below). To make the center of the nozzle hole and the beam axis of the laser beam coincident with each other is called as centering.

### Prior Art Document

### Patent Document

Patent Document 1: Japanese Patent Application Publication No. H6-328281
Patent Document 2: Japanese Patent Application Publication No. H7-144289
Patent Document 3: Japanese Patent Application Publication No. 2003-215419

### SUMMARY OF INVENTION

Since centering is done based on an operator's visual confirmation in a prior-art centering method, the operator's technical proficiency is required. In addition, it is required to carry out a test several times for checking whether or not the center of the nozzle hole and the beam axis of the laser beam coincide with each other by irradiating a laser beam. Therefore, the centering operation takes much time.

In addition, there may be a case where a light receiving sensor for detecting an irradiation position of a laser beam is used in order to irradiate the laser beam onto a predetermined position. The irradiation position of the laser beam is controlled by controlling a galvano mirror drive device based on an output of the light receiving sensor (see Japanese Patent Application Publication No. 2000-98271). In this case, it is possible to irradiate the laser beam automatically onto the predetermined irradiation position.

The irradiation position of the laser beam is a reference position on the light receiving sensor. Therefore, it becomes possible to laser-process a processed object precisely by laser-processing the processed object while making the reference position of the light receiving sensor and a processed position of the processed object coincident with each other. The laser processing machine provided with the above-mentioned light receiving sensor cuts a sheet material (the processed object) by the laser beam while also using assist gas. However, in the laser processing machine, it is impossible to detect whether or not the center of the nozzle hole and the beam axis of the laser beam coincide with each other. Therefore, it is hard to irradiate the laser beam in a state where the center of the nozzle hole and the beam axis of the laser beam coincide with each other.

An object of the present invention is to provide a method for centering a laser beam that can carry out centering of the laser beam automatically, and a laser processing machine capable of carrying out the centering method.

A first aspect of the present invention provides a method for centering a laser beam with respect to a nozzle hole of a laser processing machine in which a beam path adjusting mechanism for giving an angle to a beam axis is installed within a laser processing head, the method comprising: (a) image-capturing a shape of a distal end face of a nozzle of the laser processing head of the laser processing machine; (b) calculating a position of a center of the nozzle hole based on the image-captured shape of the distal end face of the nozzle; (c) irradiating a small power laser beam or a test beam from the nozzle hole; (d) capturing an image of the laser beam or the test beam that is irradiated formed in a vicinity of the distal end face of the nozzle; (e) calculating a position of the laser beam or the test beam that is captured; (f) calculating a positional error between the center of the nozzle hole and the laser beam or the test beam that are calculated; and (g) making the center of the nozzle hole coincident with the laser beam or the test beam in the vicinity of the distal end face by controlling, based on the positional error, the beam path adjusting mechanism that is provide within the laser processing head and adjusts an incident angle of the laser beam or the test beam onto a collimator lens provided in the laser processing head.

A second aspect of the present invention provides a laser processing machine comprising: a laser processing head within which a beam path adjusting mechanism that gives an angle to a beam axis is installed; and an image capture unit that captures an image of a distal end face of a nozzle provided in the laser processing head; wherein the laser processing head is movable in an X axis direction, in a Y axis direction and in a Z axis direction, and a condenser lens is installed therewithin, wherein the image capture unit includes an image capture device that captures an image of a shape of a distal end face of the nozzle, wherein the laser processing machine further comprises within the laser processing head: an arithmetic device that calculates a position of a center of a nozzle hole based on the shape of the distal end face of the nozzle captured by the image capture device; an optical element that forms, when the image of the shape of the distal end face of the nozzle is captured in a state where a small power laser beam or a test beam is irradiated, an image of the laser beam or the test beam in a vicinity of the distal end face of the nozzle; a test beam position arithmetic device that calculates a position of the laser beam or the test beam that is captured; an error arithmetic device that calculates a positional error between the center of the nozzle hole and the laser beam or the test beam that are calculated; and a beam path adjusting mechanism that is capable of adjusting an incident angle of the laser beam or the test beam onto a condenser lens provided in the laser processing head, and wherein the laser processing machine comprises a beam path controller that controls operations of the beam path adjusting mechanism so as to make the center of the nozzle hole and the laser beam or the test beam coincident with each other based on the positional error between the center of the nozzle hole and the laser beam or the test beam.

A third aspect of the present invention provides a laser processing machine comprising: a laser processing head within which a beam path adjusting mechanism that gives an angle to a beam axis is installed; and an image capture unit that captures an image of a distal end face of a nozzle provided in the laser processing head, wherein the laser processing head is movable in an X axis direction, in a Y axis direction and in a Z axis direction, and a condenser lens is installed therewithin, wherein the image capture unit includes an image capture device that captures an image of a shape of the distal end face of the nozzle, and wherein the laser processing machine further comprises: an arithmetic device that calculates a position of a center of a nozzle hole based on the shape of the distal end face of the nozzle captured by the image capture device; an optical element that forms, when the image of the shape of the distal end face of the nozzle is captured in a state where a small power laser beam or a test beam is irradiated, an image of the laser beam or the test beam in a vicinity of the distal end face of the nozzle; a test beam position arithmetic device that calculates a position of the laser beam or the test beam that is captured; an error arithmetic device that calculates a positional error between the center of the nozzle hole and the laser beam or the test beam that are calculated; an adjustment drive mechanism that adjusts an incident angle of the laser beam or the test beam onto a condenser lens; and a control device that controls the adjustment drive mechanism when processing a processed material so as to cancel the positional error between the center of the nozzle hole and the laser beam or the test beam on an imaging plane in the vicinity of the distal end face of the nozzle.

A fourth aspect of the present invention provides a method for centering a laser beam with respect to a nozzle hole of a laser processing machine, the method comprising: (a) image-capturing a shape of a distal end face of a nozzle of a laser processing head of the laser processing machine, and calculating a position of a center of a nozzle hole based on the shape of the distal end face; (b) irradiating a small power laser beam or a test beam from the nozzle hole, and calculating a position of the laser beam or the test beam; (c) calculating a positional error between the center of the nozzle hole and the laser beam or the test beam that are calculated; and (d) making the center of the nozzle hole and the laser beam or the test beam coincident with each other, when processing a processed material, by controlling an adjustment drive mechanism provided within the laser processing head and capable of adjusting an incident angle of the laser beam or the test beam onto a collimator lens provided in the laser processing head so as to cancel the positional error between the center of the nozzle hole and the laser beam or the test beam on an imaging plane in the vicinity of the distal end face of the nozzle.

### BRIEF DESCRIPTION OF DRAWINGS

**[****Fig. 1]** Fig. 1 is a schematically configurational diagram showing a configuration of a laser processing machine according to a first embodiment.
**[****Fig. 2]** Fig. 2 is an explanatory diagram showing a relation between a beam axis of a laser beam and a condensing position of the laser beam.
**[****Fig. 3]** Fig. 3 is a block diagram of the laser processing machine.
**[****Fig. 4]** Fig. 4 is a flowchart of a method for centering the laser beam by use of the laser processing machine.
**[****Fig. 5]** Fig. 5 is a schematically configurational diagram showing a configuration of a laser processing machine according to a second embodiment.
**[****Fig. 6]** Fig. 6(A) is a schematically vertical cross-sectional view of a condenser lens and a nozzle in a laser processing machine according to a third embodiment, and Fig. 6(B) is a schematically horizontal cross-sectional view of them.

### DESCRIPTION OF EMBODIMENTS

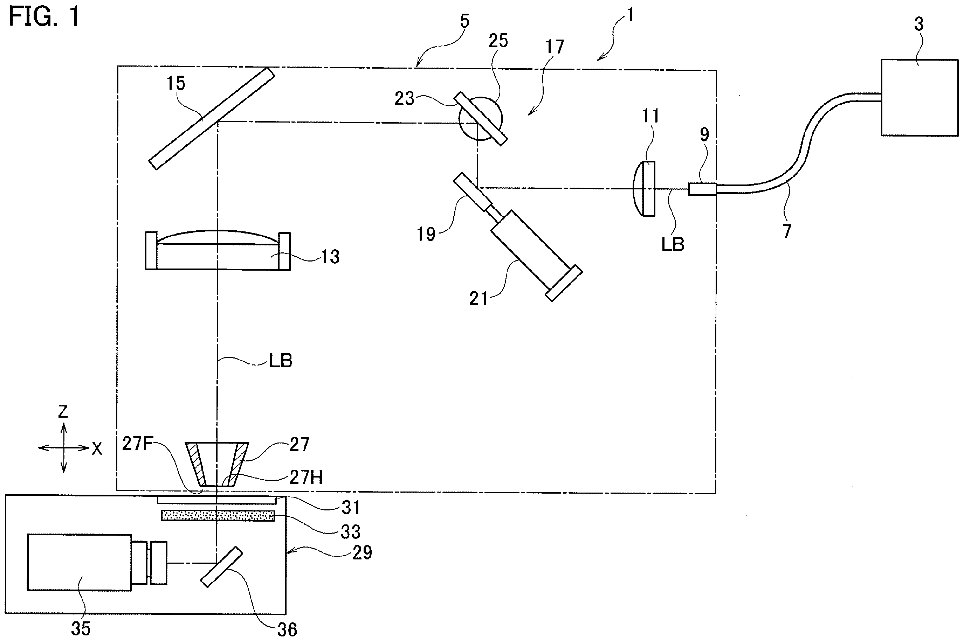

As shown in Fig. 1, a laser processing machine 1 according to a first embodiment includes a laser oscillator 3. A laser oscillator that irradiates a laser beam by amplifying an excitation light emitted from a laser diode or a laser oscillator that directly uses a laser light emitted form a laser diode is preferred as the laser oscillator 3. For example, the laser oscillator 3 is a solid laser oscillator, a fiber laser oscillator, a disk laser oscillator, or a direct diode laser oscillator (DDL oscillator). The laser oscillator 3 emits a laser light having a 1µm-band (900nm - 1100nm) wavelength. For example, a fiber laser oscillator emits a laser beam having a 1060nm - 1080nm wavelength, and a DDL oscillator emits a laser beam having a 910nm - 950nm wavelength.

The laser processing machine 1 includes a laser processing head 5 movable in XYZ axis directions. But it is enough that a processed material and the laser processing head 5 are relatively movable to each other in their motions in the X axis direction and in the Y axis direction. For example, the processed material may be movable in the X axis direction and in the Y axis direction, and the laser processing head 5 may be movable only in the Z axis direction. The laser processing head 5 includes a connector 9 that is connected with an emitting end of a process fiber 7 connected with the laser oscillator 3. A collimator lens 11 is disposed so as to be opposite to the connector 9. The collimator lens 11 has a function for collimating a laser beam LB emitted from the emitting end of the process fiber 7 as parallel rays.

A condenser lens 13 for condensing the laser beam LB and then irradiating it onto the processed material (not shown in the drawings) is provided in the laser processing head 5. A bend mirror 15 for bending the laser beam transmitting though the collimator lens 11 toward the condenser lens 13 is provided between the condenser lens 13 and the collimator lens 11. In addition, a laser light path adjusting mechanism (a beam path adjusting mechanism) 17 capable of adjusting (changing) an incident angle of the laser beam LB onto the condenser lens 13 is provided between the bend mirror 15 and the collimator lens 11. The laser beam path adjusting mechanism 17 is disposed within the laser processing head 5.

In the present embodiment, the laser beam path adjusting mechanism 17 is configured of a galvano scanner. The galvano scanner 17 is configured to be capable of scanning the laser beam LB on an XY two-dimensional plane. Therefore, the galvano scanner 17 includes an X axis scanning mirror 19 for scanning the laser beam LB transmitting though the collimator lens 11 in the X axis direction, and an X axis motor (galvano motor) 21 for rotating the X axis scanning mirror 19. ·· Further, the galvano scanner 17 includes a Y axis scanning mirror 23 for scanning the laser beam LB reflected by the X axis scanning mirror 19 in the Y axis direction, and a Y axis motor (galvano motor) 25 for rotating the Y axis scanning mirror 23.

By controlling the X axis motor 21 and the Y axis motor 25, the laser beam LB transmitting though the collimator lens 11 is made incident into the bend mirror 15 while being scanned in the X axis direction and in the Y axis direction. Therefore, an incident path of the laser beam LB to be made incident into the condenser lens 13 can be adjusted in the X axis direction and in the Y axis direction. Namely, an irradiation position of the laser beam LB with respect to the center of a nozzle hole 27H of a nozzle 27 disposed at a distal end of the laser processing head 5, i.e. a beam axis can be adjusted.

The laser beam LB transmitting though the condenser lens 13 is image-formed on a flat plane almost identical to a distal end face 27F of the nozzle 27 (an imaging plane). Therefore, the condenser lens 13 configures an optical element for image-forming the laser beam LB in the vicinity of the distal end face of the nozzle 27.

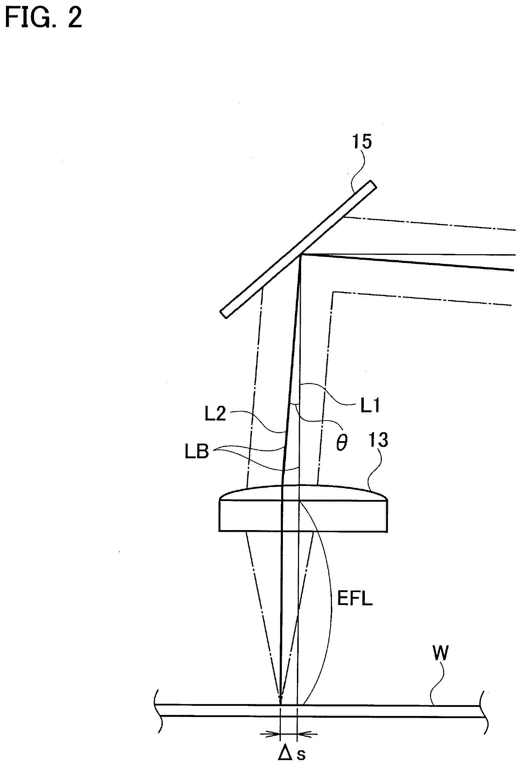

Fig. 2 shows a state where any one or both of the X axis scanning mirror 19 and the Y axis scanning mirror 23 is/are inclined and thereby a position of the laser beam LB irradiated onto the processed material W is displaced. In Fig. 2, a thin solid line L1 deflected by the bend mirror 15 and then transmitting through the condenser lens 13 indicates the beam axis of the laser beam LB when the laser processing machine 1 is in its reference state.

The angle of the beam axis of the laser beam LB made incident on the bend mirror 15 is changed when the galvano scanner 17 located in advance of the bend mirror 15 is operated, and thereby the beam axis deviates from the center of the bend mirror 15. However, in Fig. 2, an incident position of the laser beam onto the bend mirror 15 is made identical both before and after the operation of the galvano scanner 17 for simplicity's sake of explanations.

Explanations will be made for a case where the beam axis of the laser beam LB is displaced from the thin solid line L1 to a thick solid line L2 by the galvano scanner 17. The laser beam LB reflected by the bend mirror 15 inclines by an angle θ (with respect to the reference state), and thereby the irradiation position of the laser beam LB on the processed material W displaces by a distance Δs. An EFL in Fig. 2 is an effective focal length of the condenser lens 13.

If the galvano scanner 17 inclines the laser beam LB by the angle θ in an opposite direction to the direction shown in Fig. 2, the irradiation position of the laser beam LB on the processed material W can be displaced by the distance Δs in the opposite direction to the direction shown in Fig. 2. The distance Δs is a distance smaller than the diameter of the nozzle hole 27H, and is preferably a distance not larger than a maximum permissible distance obtained by subtracting a given margin from the diameter of the nozzle hole 27H.

As shown in Fig. 1, the laser processing machine 1 that cuts a sheet material by the laser beam in combination with assist gas includes the laser processing head 5 within which the galvano scanner 17 for giving an angle to the beam axis is installed. When, for example, the beam is oscillated in a processing travel direction by the galvano scanner 17 in the laser processing machine 1, viscosity of melted metal in a cut slit is kept and thereby ejection of dross by the assist gas can be improved. And, for example, when the beam is oscillated in a perpendicular direction to the processing travel direction by the galvano scanner 17, the cut slit is widened and thereby ejection of dross by the assist gas can be improved and roughness of a cut surface can be improved. The inventors found these improvements brought by the galvano scanner 17. Therefore, synergetic effects can be brought by providing the galvano scanner 17 within the laser processing head 5 in addition to the motions of the laser processing head 5 in the X axis direction, in the Y axis direction and in the Z axis direction.

In order to check whether or not the center of the nozzle hole 27H of the nozzle 27 and the beam axis of the laser beam LB coincide with each other, a box-shaped image capture unit 29 for capturing an image of the distal end face 27F of the nozzle 27 is provided in the laser processing machine 1. The image capture unit 29 is disposed at a predetermined position in the laser processing machine 1. A protection glass 31 and an optical element 33 is provided at a position associating with an image capture reference position of the image capture unit 29. A luminescent spot of a visible light is formed at an irradiation position of the laser beam LB on the optical element 33. For example, glass containing nano-sized crystals Yaglass-T (registered trademark) of Sumita Optical Glass, Inc. can be used as the optical element 33.

In order to capture an image of the luminescent spot on the optical element 33, the image capture unit 29 includes a camera 35 such as a CCD camera that is installed horizontally and serves as an image capture device. A bend mirror 36 for bending a ray of light from the luminescent spot toward the camera 35 is provided beneath the optical element 33.

According to the above-explained configuration, when the laser processing head 5 is aligned at the reference position above the optical element 33 of the image capture unit 29, the distal end face 27F of the nozzle 27 can be captured by the camera 35. In addition, when a small power laser beam LB or a guide beam is irradiated from the laser processing head 5 (used as a test beam), the luminescent spot is formed on the optical element 33. Then, the camera 35 can also capture this luminescent spot concurrently. Namely, it is required that the distal end face 27F and the optical element 33 for converting the test beam to a visible light that are captured by the camera 35 are positioned within a depth of field of the camera 35. In other words, the optical element 33 is positioned in the vicinity of the distal end face 27F.

Like as a nozzle changer for example, the camera 35 (the image capture unit 29) is evacuated to an area in which a processed material is never laid, and, as needed, is moved to a position beneath the laser processing head 5 and then set at the image capture reference position.

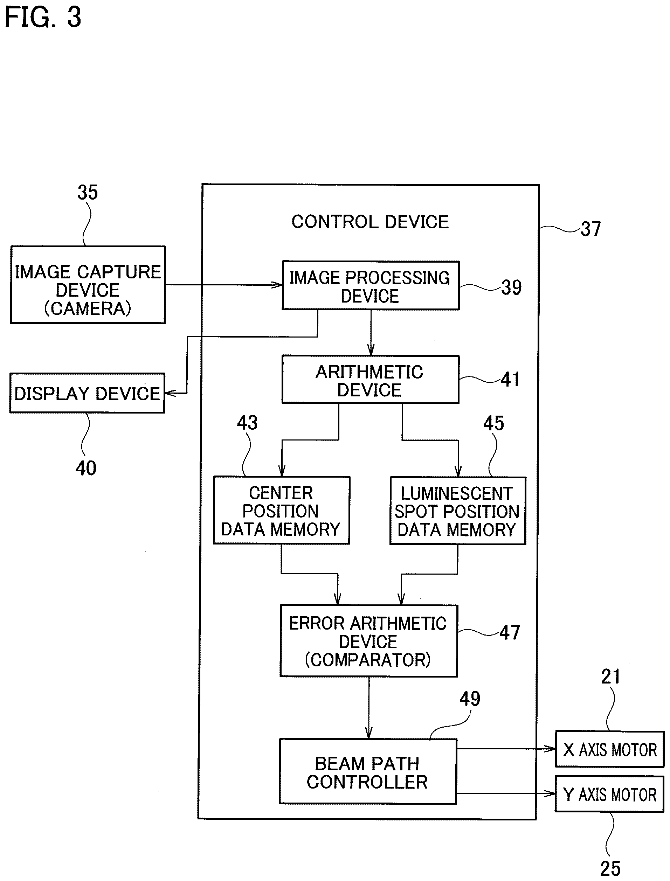

The camera 35 is connected with a control device 37 (see Fig. 3) for controlling the X axis motor 21 and the Y axis motor 25 of the galvano scanner 17. The control device 37 is configured of a computer, and includes an image processing device (unit) 39 for image-processing image signals input from the camera 35. The image processing device 39 is connected with a display device 40, and connected with an arithmetic device (unit) 41.

The arithmetic device 41 has functions for calculating a shape of the distal end face 27F and calculating a position of the center of the nozzle hole 27H based on image data of the distal end face 27F captured by the camera 35 and then image-processed by the image processing device 39. Then positional data (a XY coordinate) of the calculated position of the center is recorded (stored) in a center position data memory 43.

In addition, the control device 37 sets the laser processing head 5 at a position associated with the image capture reference position of the image capture unit 29. And, the arithmetic device 41 has a function for calculating a position of the luminescent spot formed on the optical element 33 based on image data captured when irradiating the test beam on the optical element 33. Namely, the arithmetic device 41 functions as a test beam position arithmetic device that calculates the position of the luminescent spot of the test beam on the optical element 33. The calculated positional data (XY coordinate) of the luminescent spot is recorded (stored) in a luminescent spot position data memory 45.

The control device 37 also includes an error arithmetic device (unit) (comparator) 47 for calculating whether or not the center of the nozzle hole 27H and the luminescent spot coincide with each other. The control device 37 further includes a light path controller 49 for controlling operations of the X axis motor 21 and the Y axis motor 25 based on the calculation result of the error arithmetic device 47.

The beam path controller 49 controls the incident angle of the laser beam LB made incident onto the condenser lens 13 by controlling the X axis motor 21 and the Y axis motor 25 so as to make the center of the nozzle hole 27H and the luminescent spot coincident with each other (i.e. to cancel a positional error between the center of the nozzle hole 27H and the luminescent spot). For example, when the nozzle 27 has been exchanged, the center of the nozzle hole 27H of the exchanged nozzle 27 and the luminescent spot formed due to the irradiation of the test beam can be made coincident with each other easily and precisely according to the control device 37. Note that it becomes possible to process the processed material with no error by reflecting the error data of the error arithmetic device 47 to a processing command of the processed material.

In a case of visibly confirming a displacement error between the nozzle center and the test beam, the captured shape of the distal end face 27F is displayed on the display device 40 and the calculated position of the center of the nozzle hole 27H is indicated by a sign such as "×" on the display device 40. Then, the position of the luminescent spot of the test beam and the "×" sign can be made coincident with each other on the display screen of the display device 40 by controlling the X axis motor 21 and the Y axis motor 25 by use of an input device (operation device) such as a joystick. Here, it is preferable that the displayed image on the display device 40 can be magnified.

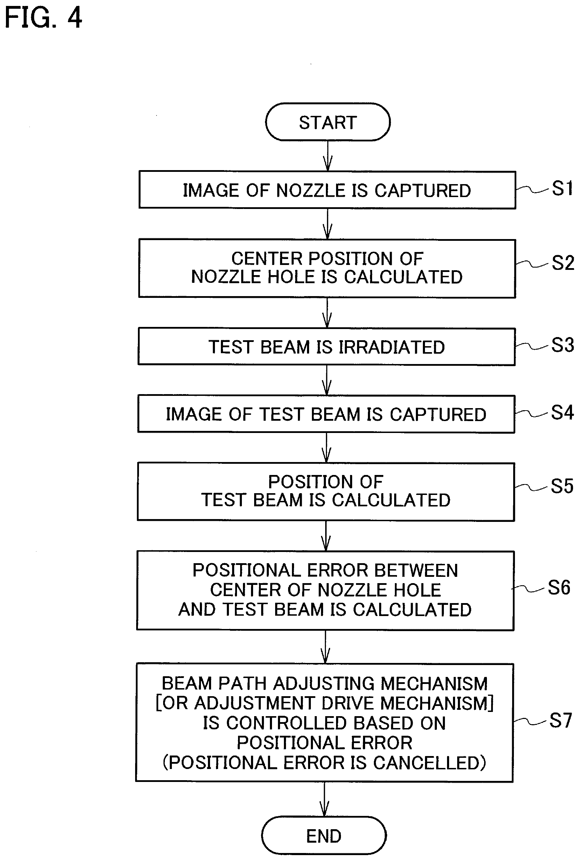

The method for centering the laser beam will be explained with reference to a flowchart shown in Fig. 4. First, the control device 37 controls the camera 35 to capture an image of the distal end face 27F of the nozzle 17 (step S1). The arithmetic means 41 of the control device 37 calculates the position of the center of the nozzle hole 27H based on the captured shape of the distal end face 27F of the nozzle 27 by using the image processing device 39 (step S2). The calculated position of the center of the nozzle hole 27H is stored in the center position data memory 43. Subsequently, the control device 37 irradiates the test beam (or the small power laser beam) from the nozzle hole 27H (step S3). As explained above, the irradiated test beam forms an image in the vicinity of the distal end face 27F, i.e. on the optical element 33. The control device 37 captures the image of the test beam (the luminescent spot) formed on the optical element 33 by controlling the camera 35 (step S4). The arithmetic means 41 of the control device 37 calculates the position of the test beam based on the captured image of the test beam by using the image processing device 39 (step S5). The calculated position of the test beam is stored in the luminescent spot position data memory 45.

The error arithmetic device 47 of the control device 37 calculates a positional error between the center of the nozzle hole 27H and the test beam (the luminescent spot) from the position of the center of the nozzle hole 27H calculated in the step S2 (or the position of the center stored in the center position data memory 43) and the position of the test beam (the luminescent spot) calculated in the step S5 (or the position stored in the luminescent spot position data memory 45) (step S6). Here, the position of the center of the nozzle hole 27H and the positon of the test beam (the luminescent spot) may be displayed on the display device 40 as explained above. Note that, in the control shown in Fig. 4, the above-mentioned input device is not used, and the positional error is calculated automatically. The beam path controller 49 of the control device 37 adjusts the incident angle of the test beam onto the condenser lens 13 by controlling the laser beam path control mechanism 17 (the X axis motor 21 and the Y axis motor 25) based on the calculated positional error to make the test beam coincident with the center of the nozzle hole H (step S7). Namely, the positional error is cancelled and thereby the centering of the laser beam (the test beam) is completed.

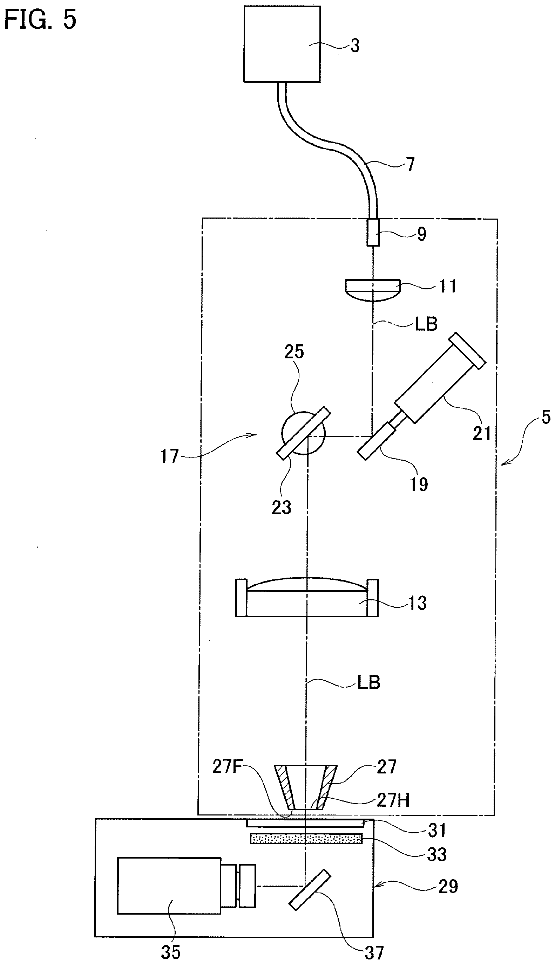

In the above first embodiment, the galvano scanner is provided between the collimator lens 11 and the bend mirror 15 as the laser beam path adjusting mechanism 17. However, in a second embodiment shown in Fig. 5, the laser beam path adjusting mechanism 17 is provided at a position of the bend mirror 15 to adjust the beam path of the laser beam LB with respect to the condenser lens 13. According to this configuration, the bend mirror 15 can be omitted, and the configuration can be simplified.

The galvano scanner as the laser beam path adjusting mechanism 17 is provided between the collimator lens 11 and the condenser lens 13 within the laser processing head 5. The positions of the collimator lens 11 and the condenser lens 13 are predetermined fixed positions, and the galvano scanner is controlled so as to scan the laser light with parallel rays collimated by the collimator lens 11 in the X axis direction and in the Y axis direction. Namely, the beam path is adjusted within a segment of a short beam path length between the collimator lens 11 and the condenser lens 13. Therefore, in comparison with a case with a long beam path length, the incident angle (incident position) of the laser beam LB onto the condenser lens 13 can be adjusted more precisely.

In the above first and second embodiments, the galvano scanner is adopted as the laser beam path adjusting mechanism. However, as a configuration for making the center of the nozzle hole 27H and the beam axis of the laser beam LB coincident with each other, an adjustment drive mechanism that displaces at least one of the condenser lens 13 and the nozzle 27 in the radial direction can be adopted.

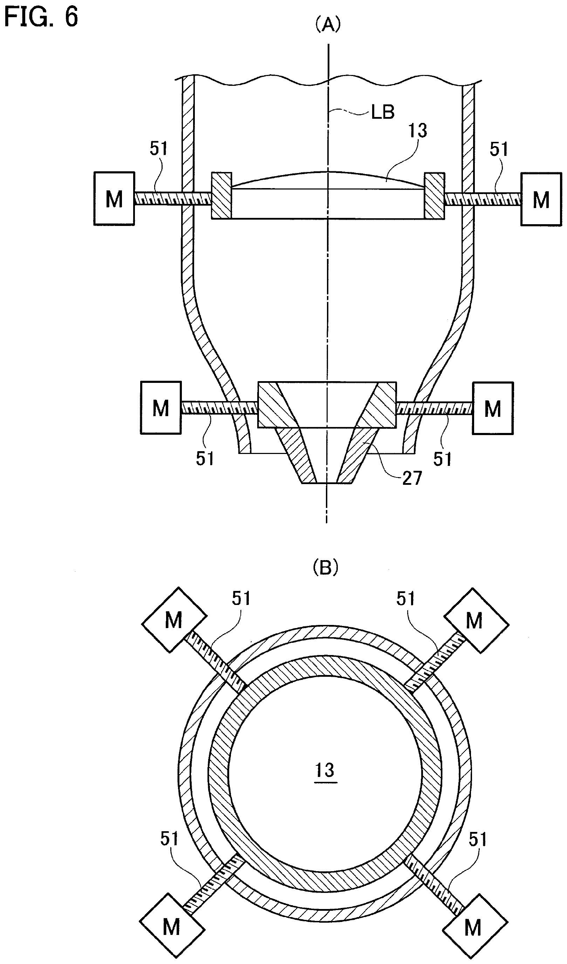

In a third embodiment shown in Fig. 6, adjusting screws 51 are provided at plural positions at the peripheries of the condenser lens 13 and the nozzle 27. The condenser lens 13 (the nozzle 27) can be displaced in the radial direction by the adjusting screws 51 extending in the radial direction. Note that both of the condenser lens 13 and the nozzle 27 can be displaced in the radial direction in the present embodiment, but it is enough that at least one of the condenser lens 13 and the nozzle 27 can be displaced in the radial direction as explained above. Then, each of the adjusting screws 51 may be rotated by an adjusting motor M such as a servomotor. In addition, one of the adjusting screws 51 opposing to each other may be changed to a spring for urging the condenser lens 13 (the nozzle 27) toward the center. The motors M are controlled by the above-mentioned control device 37. The adjusting screws 51 (and the springs) and the motors M configure the adjustment drive mechanism.

According to the above configuration, the positions of the condenser lens 13 and the nozzle 27 can be adjusted in the radial direction independently from each other by adjusting the rotations of the motors M. Therefore, the beam axis of the laser beam LB and the center of the nozzle hole 27H can be automatically made coincident with each other. Note that a control almost equivalent to the control of the flowchart shown in Fig. 4 is also done in the third embodiment. However, in the step S7, the beam path controller 49 of the control device 37 adjusts the incident angle of the test beam onto the condenser lens 13 by controlling the adjustment drive mechanism (instead of the laser beam path control mechanism 17) based on the calculated positional error to make the test beam coincident with the center of the nozzle hole H.

In the first to third embodiments, the image of the distal end face 27F is captured by the camera 35. Therefore, the state of the distal end face 27F can be confirmed visually by displaying the captured image on the display device 40. Thus, damages of the nozzle 27 and adhesions, such as spatters, on the nozzle 27 can be confirmed.

In addition, in the first to third embodiments, the beam axis can be adjusted automatically such that the center of the nozzle hole 27H and the irradiation position of the laser beam LB are made coincident with each other. Therefore, the center of the nozzle hole 27H and the irradiation position (the beam axis) of the laser beam LB can be made coincident with each other easily and quickly. Namely, the centering operation is easy. In other words, the center of the nozzle hole 27H and the laser beam can be made coincident with each other easily, and the operation for making them coincident can be automated.

The entire contents of a Japanese Patent Application No. 2018-44102 (filed on March 12, 2018) are incorporated herein by reference. Although the invention has been described above by reference to a certain embodiment of the invention, the invention is not limited to the embodiment described above. Scope of the present invention is determined in the context of the claims.

## Claims

1. A method for centering a laser beam with respect to a nozzle hole of a laser processing machine in which a beam path adjusting mechanism for giving an angle to a beam axis is installed within a laser processing head, the method comprising:
(a) image-capturing a shape of a distal end face of a nozzle of the laser processing head of the laser processing machine;
(b) calculating a position of a center of the nozzle hole based on the image-captured shape of the distal end face of the nozzle;
(c) irradiating a small power laser beam or a test beam from the nozzle hole;
(d) capturing an image of the laser beam or the test beam that is irradiated formed in a vicinity of the distal end face of the nozzle;
(e) calculating a position of the laser beam or the test beam that is captured;
(f) calculating a positional error between the center of the nozzle hole and the laser beam or the test beam that are calculated; and
(g) making the center of the nozzle hole coincident with the laser beam or the test beam in the vicinity of the distal end face by controlling, based on the positional error, the beam path adjusting mechanism that is provide within the laser processing head and adjusts an incident angle of the laser beam or the test beam onto a collimator lens provided in the laser processing head.

2. The method for centering a laser beam according to claim 1, wherein
the beam path adjusting mechanism is a galvano scanner capable of scanning the laser beam or the test beam on an XY two-dimensional plane.

3. A laser processing machine comprising:
a laser processing head within which a beam path adjusting mechanism that gives an angle to a beam axis is installed; and
an image capture unit that captures an image of a distal end face of a nozzle provided in the laser processing head;
wherein the laser processing head is movable in an X axis direction, in a Y axis direction and in a Z axis direction, and a condenser lens is installed therewithin,
wherein the image capture unit includes an image capture device that captures an image of a shape of the distal end face of the nozzle,
wherein the laser processing machine further comprises within the laser processing head:
an arithmetic device that calculates a position of a center of a nozzle hole based on the shape of the distal end face of the nozzle captured by the image capture device;
an optical element that forms, when the image of the shape of the distal end face of the nozzle is captured in a state where a small power laser beam or a test beam is irradiated, an image of the laser beam or the test beam in a vicinity of the distal end face of the nozzle;
a test beam position arithmetic device that calculates a position of the laser beam or the test beam that is captured;
an error arithmetic device that calculates a positional error between the center of the nozzle hole and the laser beam or the test beam that are calculated; and
a beam path adjusting mechanism that is capable of adjusting an incident angle of the laser beam or the test beam onto a condenser lens provided in the laser processing head, and
wherein the laser processing machine comprises a beam path controller that controls operations of the beam path adjusting mechanism so as to make the center of the nozzle hole and the laser beam or the test beam coincident with each other based on the positional error between the center of the nozzle hole and the laser beam or the test beam.

4. The laser processing machine according to claim 3, wherein
the beam path adjusting mechanism is a galvano scanner capable of scanning the laser beam or the test beam on an XY two-dimensional plane.

5. The laser processing machine according to claim 4, wherein
the galvano scanner is disposed, between a collimator lens and the condenser lens that are provided within the laser processing head, at a position for bending the laser beam or the test beam transmitting through the collimator lens toward the condenser lens.

6. A laser processing machine comprising:
a laser processing head within which a beam path adjusting mechanism that gives an angle to a beam axis is installed; and
an image capture unit that captures an image of a distal end face of a nozzle provided in the laser processing head;
wherein the laser processing head is movable in an X axis direction, in a Y axis direction and in a Z axis direction, and a condenser lens is installed therewithin,
wherein the image capture unit includes an image capture device that captures an image of a shape of a distal end face of the nozzle, and
wherein the laser processing machine further comprises:
an arithmetic device that calculates a position of a center of a nozzle hole based on the shape of the distal end face of the nozzle captured by the image capture device;
an optical element that forms, when the image of the shape of the distal end face of the nozzle is captured in a state where a small power laser beam or a test beam is irradiated, an image of the laser beam or the test beam in a vicinity of the distal end face of the nozzle;
a test beam position arithmetic device that calculates a position of the laser beam or the test beam that is captured;
an error arithmetic device that calculates a positional error between the center of the nozzle hole and the laser beam or the test beam that are calculated;
an adjustment drive mechanism that adjusts an incident angle of the laser beam or the test beam onto a condenser lens; and
a control device that controls the adjustment drive mechanism when processing a processed material so as to cancel the positional error between the center of the nozzle hole and the laser beam or the test beam on an imaging plane in the vicinity of the distal end face of the nozzle.

7. A method for centering a laser beam with respect to a nozzle hole of a laser processing machine, the method comprising:
(a) image-capturing a shape of a distal end face of a nozzle of a laser processing head of the laser processing machine, and calculating a position of a center of a nozzle hole based on the shape of the distal end face;
(b) irradiating a small power laser beam or a test beam from the nozzle hole, and calculating a position of the laser beam or the test beam;
(c) calculating a positional error between the center of the nozzle hole and the laser beam or the test beam that are calculated; and
(d) making the center of the nozzle hole and the laser beam or the test beam coincident with each other, when processing a processed material, by controlling an adjustment drive mechanism provided within the laser processing head and capable of adjusting an incident angle of the laser beam or the test beam onto a collimator lens provided in the laser processing head so as to cancel the positional error between the center of the nozzle hole and the laser beam or the test beam on an imaging plane in the vicinity of the distal end face of the nozzle.
